# EUROPEAN PATENT SPECIFICATION

(11) **EP 3 468 368 B1**
(45) Date of publication and mention of the grant of the patent: **26.02.2020**
(21) Application number: 17732807.7
(22) Date of filing: 09.06.2017
(51) Int. Cl.: A01N 63/04, A01P 3/00

(54) **METHOD OF PREVENTING OR COMBATING MYCOSPHAERELLA FIJIENSIS**
VERFAHREN ZUR VORBEUGUNG ODER BEKÄMPFUNG VON MYCOSPHAERELLA FIJIENSIS
PROCÉDÉ DE PRÉVENTION OU DE LUTTE CONTRE MYCOSPHAERELLA FIJIENSIS

(30) Priority: 10.06.2016 BE 201605437
(43) Date of publication of application: 17.04.2019
(73) Proprietor: BIPA NV, 1840 Londerzeel (BE)
(72) Inventor: DE SAEGHER, Johan, 9070 Destelbergen (BE); FRATI, Sandro, 2000 Antwerpen (BE); NESLER, Andrea, 38057 Pergine Valsugana (IT); VERMAETE, Ann, 9220 Hamme (BE)
(74) Representative: De Clercq & Partners
(86) International application number: PCT/EP2017/064139
(87) International publication number: WO 2017/212032

(56) References cited:
- WO-A1-2009/116106
- POHOLL ADAN SAGRATZKI CAVERO ET AL: "Biological control of banana black Sigatoka disease with Trichoderma", CIÊNCIA RURAL, vol. 45, no. 6, 1 June 2015 (2015-06-01), pages 951-957, XP055314076, DOI: 10.1590/0103-8478cr20140436
- C. JIMENEZ ET AL: "Effect of inoculation of two types of banana seed with two isolates of Trichoderma atroviride on plants performance on field under Black Sigatoka", REVISTA CIENTÍFICA UDO AGRÍCOLA, vol. 9, no. 2, 1 January 2009 (2009-01-01) , pages 403-413, XP055314127, ISSN: 1317-9152
- JUAN ARZATE-VEGA ET AL: "Antagonismo de Trichoderma spp. sobre Mycosphaerella fijiensis Morelet, Agente Causal de la Sigatoka Negra del Plátano (Musa sp.) in vitro e Invernadero", REVISTA MEXICANA DE FITOPATOLOGIA, vol. 24, no. 2, 1 January 2006 (2006-01-01), pages 98-104, XP055314145, Obregon, Mexico ISSN: 0185-3309 cited in the application
- DIONISIO G. ALVINDIA: "Inhibitory influence of biocontrol agents, plant oils and an inorganic salt on Mycosphaerella fijiensis and Cordana musae, the causal pathogen of black sigatoka and leaf spot of banana", AFRICAN JOURNAL OF MICROBIOLOGY RESEARCH, vol. 6, no. 19, 23 May 2012 (2012-05-23), XP055314154, DOI: 10.5897/AJMR12.175 cited in the application

## Description

### FIELD OF THE INVENTION

Described herein is a method of preventing or combating Mycosphaerella fijiensis in a plant or plant material by applying Trichoderma atroviride SC 1 on the plant, plant material, or surroundings thereof. In one aspect the method involves colonizing leaf tissue of the plant with Trichoderma atroviride SC1.

### BACKGROUND

For quite some time an increased consciousness has risen of the potential environmental and health problems associated with the use of synthetic chemical pesticides. Concerns include the presence of residues of chemicals in the environment and in food as well as the risk of those exposed to pesticides such as farmers, bystanders or people living in the area where pesticides are applied. The application of pesticides is often not very precise, and unintended exposures occur to other organisms, including other naturally occurring beneficial organisms. Because of their chemical nature, synthetic pesticides may be also toxic and non-biodegradable. A further problem arising with the use of such agents is that their repeated and exclusive application often leads to the emergence of pests'/pathogens' resistance, which typically extends to other control agents having the same mode of action. An effective control of pathogenic organisms with such agents is then no longer possible. Active ingredients having new mechanisms of action are required but these are difficult and expensive to develop.

These issues have resulted in growing pressure to reduce the use of chemical pesticides. This in turn has raised an increased interest in and development of biologically based products such as biocontrol agents. Use of the latter agents requires an evaluation of the environmental interactions in terms of survival of biocontrol agents as well as their efficacy against pathogens. Biocontrol agents that are more flexible in terms of environmental adaptation are preferred over agents requiring specific environmental conditions.

One class of pesticides with widespread use is that of the fungicides. Chemical fungicides are widely used but suffer from the disadvantages mentioned above, which has fostered interest in identifying natural fungicides basically for the same reasons as explained above. One such natural fungicide is Trichoderma atroviride, which is a mycoparasitic fungus that competes with other fungi via parasitation, production of lytic enzymes and competition for space and nutrients.

A number of strains of *Trichoderma* have been developed as biocontrol agents against fungal diseases of plants and find use in the protection of field and greenhouse crops. WO 2009/116106 describes the use of the particular strain Trichoderma atroviride SC1 for biocontrol of a number of fungal diseases in plants. These include diseases caused by a pathogenic fungus causing wood diseases (Phaeomoniella chlamydospora, Phaeoacremonium aleophilum and Fomitiporia mediterranea), foliar diseases (the powdery mildew causative agent Podosphaera xanthii), fruit and flower diseases (Botrytis cinerea) and root diseases caused by Armillaria genus (Armillaria mellea and A. gallica).

There are still several important plant diseases for which effective biocontrol agents are highly desirable. One of these is the disease caused by the ascomycete fungus Mycosphaerella fijiensis, the cause of the plant disease black sigatoka, a common infection on banana plants. Black sigatoka, also known as black leaf streak, is a leafspot disease of banana plants caused by the Mycosphaerella fijiensis. Plants with leaves damaged by the disease may have up to 50% lower yield of fruit and control can take up to 50 sprays a year.

Both conidia and ascospores are important in its dispersal. Most infections start on the underside of the leaf. The symptoms start as small specks that become streaks running parallel to the leaf veins. These streaks aggregate and eventually form spots that coalesce, form a chlorotic halo, and eventually merge to cause extensive necrosis. Black sigatoka has replaced yellow sigatoka, which is caused by Mycosphaerella musicola, and has become the dominant disease of bananas worldwide. Because the pathogen developed resistance over the years, higher frequency of applications is required, increasing the impact on the environment and health of the banana workers. Some Trichoderma species and strains have been tested as fungicides against Mycosphaerella fijiensis (African Journal of Microbiology Research Vol. 6(19), pp. 4179-4184, 23 May, 2012; Revista Mexicana de Fitopatología . 2006, Vol. 24 Issue 2, p98-104; Revista de Protección Vegetal 2015 Vol. 30 No. 2 pp. 133-138). Also Cavero et al. (Ciencia Rural, 45, 6, p951-957) and Jimenez et al (Revista Cientifica udo Agricola, 9, 2, p403-413) describe the treatment of Mycosphaerella fijiensis using different Trichoderma species and strains.However in spite of initial promising experimental results, none of these was developed as commercial product because of the inadequate efficacy found when tested under real field conditions. In Cavero et al. for instance the Trichoderma species and strains used only provide a very slow improvement (34.5% after 60 days) making it almost impossible to use these Trichoderma species and strains in practice.

Hence there is a need to prevent and combat plant pathologies caused by Mycosphaerella fijiensis, in particular black sigatoka, by biocontrol agents, thereby providing effective control of this fungus. There is a particular need for such prevention and combat under real field conditions.

### SUMMARY OF THE INVENTION

It has been found that Trichoderma atroviride SC1 is a faster colonizer of dead or old banana leaf tissue in comparison to other Trichoderma strains. It consumes the dead or old leaf substrate where Mycosphaerella fijiensis proliferates and therefore it impedes the pathogen to develop. This is the reason why Trichoderma atroviride SC1 is effective against diseases caused by the fungus Mycosphaerella fijiensis, in particular against black sigatoka, also under real field treatment conditions, contrary to other Trichoderma strains.

Thus in one aspect, a method is provided for preventing or combating Mycosphaerella fijiensis fungal infection in a plant or plant material, which method comprises applying Trichoderma atroviride SC1 to the plant, plant material, or the locus of the plant. In one embodiment, the Mycosphaerella fijiensis fungal infection is in a plant.

In another aspect there is provided the use of Trichoderma atroviride SC1 in the prevention or combat of Mycosphaerella fijiensis fungal infection in a plant or plant material.

The plant in particular belongs to the genus Musa or the plant material is derived from a plant that belongs to the genus Musa. In one embodiment, the plant that belongs to the genus Musa is Musa acuminata, Musa balbisiana or Musa × paradisiaca. The Trichoderma atroviride SC1 may be applied to the leaves of the plant.

In the methods of the invention, one or more other pesticides that are non-toxic to Trichoderma atroviride SC1 may be applied to the plant, plant material, or the locus of the plant.

In the methods of the invention, the Trichoderma atroviride SC1 is applied solo or in a composition comprising one or more auxiliaries.

The compositions for use in the present invention may comprise Trichoderma atroviride SC1 and one or more other pesticides that are non-toxic to Trichoderma atroviride SC1. Such compositions may or may not contain one or more auxiliaries.

In one embodiment, the composition is a liquid, in particular a sprayable liquid. In another embodiment, the composition is sprayed on the whole of the above-ground part of the plant.

In a further aspect there is provided the use of Trichoderma atroviride SC1 in the prevention or combat of Mycosphaerella fijiensis fungal infection in a plant or plant material.

### BRIEF DESCRIPTION OF THE DRAWINGS

The following description of the figures of specific embodiments of the invention is merely exemplary in nature and is not intended to limit the present teachings, their application or uses.
**Figure 1****:** The experimental set up of example 1: leaf stripes inoculated at one side (striped area) and sampling points to assess the growth rate.
**Figure 2****:** Example 2 - Trial 2. Average *number* of piscas in the treated and untreated plants before and after treatment. Different letters mean different significance (P < 0.05).
**Figure** 3: Average number of piscas and disease stage in Trial 3 (Example 2).
**Figure 4****:** Colonization of banana leaves by Trichoderma atroviride under field conditions. T. atroviride SC1 incidence of colonization expressed as percentage (Example 3).
**Figure** 5: Colonization of banana leaves by Trichoderma atroviride under field conditions. T. atroviride SC1 radial growth on semi selective medium (Example 3).

### DETAILED DESCRIPTION

The present invention will be described with respect to particular embodiments, but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments, which "consist of" said recited members, elements or method steps.

The term "composition" as used herein refers to the form in which the Trichoderma atroviride SC1 is used.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

A colony-forming unit (CFU) is a unit used to estimate the number of viable bacteria or fungal cells in a sample. Viable is defined as the ability to multiply via binary fission under the controlled conditions. Counting with colony-forming units requires culturing the microbes and counts only viable cells. A CFU can be measured using methodology known in the art.

As used herein "mL⁻¹" or "g⁻¹" are meant to be the same as "per mL" or "per g" (or "/mL" or "/g").

As used herein the term "pesticide" refers to agents to prevent or combat pathogenic damage or pest damage in a plant or plant material.

As used herein "preventing or combating Mycosphaerella fijiensis" refers to prevention or prophylaxis of this microorganism when not yet present; to combating or treating this microorganism when present, which comprises its reduction, control and stabilization, suppression of development.

The term "plant" includes whole plants or parts of plants such as the whole of the root system, or individual roots, the part of the plant above ground, including leaves, stems, seeds, bulbs, tubers, flowers, fruits, and the like.

The term "plant material" is meant to comprise materials derived from a plant and can be living or non-living. It includes any type of harvested material (crops), such as roots, leaves, stems, wood, seeds, tubers, flowers, fruits, and the like.

Trichoderma atroviride strain SC1 has been deposited in 2007 under the Budapest Treaty at the CBS (Centraalbureau voor Schimmelculturen) under N° CBS 122089. This strain can be isolated and grown as described in WO 2009/116106.

Trichoderma atroviride SC1 is a mesophilic fungus as most Trichoderma spp. that belongs to the genus of fungi Trichoderma, which is present in all soils.

It is able to utilize a wide range of products as sole carbon and nitrogen sources. Fungal growth in culture media is superior with some nitrogen sources such Yeast Extract, Nitrite, Tryptone, Peptone, Glutamine and Asparagine or some carbon sources such Mannose, Galactose, Sucrose, Malt Extract, Cellobiose Glucose and Trehalose. Trichoderma atroviride SC1 survives in a temperature range comprised from -1 and 35°C and grows in a range of temperatures comprised from 5 to 30°C. The optimal temperature for growth is 25°C ± 1°C, although fungal radial growth at 20°C was found not significantly different from the growth observed at 25°C. The maximum temperature for Trichoderma atroviride SC1 survival (30°C) is lower than human body temperature, which is a good indication that this fungus is not pathogenic to humans. The pH tolerance levels of Trichoderma atroviride SC1 fall within the common range for Trichoderma strains, e.g. a pH range comprised from 3 to 10. The minimum limit of water activity tolerance of Trichoderma atroviride SC1 is 0.910. The preferred value of water activity is 0.998, which correspond to values of high relative humidity conditions preferred by most of the fungal plant pathogens. Trichoderma atroviride SC1 persists in soil at effective levels for long periods (more than one year). It can be easily dispersed on vegetable or wood parts, where it survives as an antifungal agent also for more than one year. Trichoderma atroviride SC1 advantageously has better stress tolerance than its target pathogens.

Trichoderma atroviride SC1 can be detected as described in WO2009/116106, by achieving parallel amplification of Endochitinase 42 gene {ech42) GenBank Ace N°AB041753.1 and of a G protein α subunit gene {tga3) GenBank Ace N°AF452097.1 with suitable primer sets.

Treatment can preferably be carried out directly on the whole of the plant or on a part of the plant. Treatment can also be indirectly by applying Trichoderma atroviride SC1 enriched substrata in or on the soil, preferably in close proximity (locus) of the plant. Plants or plant materials that benefit from this treatment are preferably selected from the genus Musa, which genus includes bananas and plantains. Particular examples include cultivated bananas such as Musa acuminata, Musa balbisiana, and Musa × paradisiaca, which is the accepted name for the hybrid between Musa acuminate and Musa balbisiana. Most cultivated bananas and plantains that may be treated are triploid cultivars either of this hybrid or of Musa acuminata alone.

The Trichoderma atroviride SC1 can be used as sole agent but preferably is used in the form of a composition comprising this microorganism as the active agent and one or more auxiliaries. Such composition may be referred to as formulation.

The compositions for use in the present invention may comprise Trichoderma atroviride SC1 and one or more other pesticides that are non-toxic to Trichoderma atroviride SC1, in particular one or more other fungicides, which pesticides (or fungicides) preferably are biocontrol agents. Such compositions may or may not contain one or more auxiliaries.

The compositions for use in the invention preferably are formulated for use as agricultural compositions. The compositions may be in solid, in semi-liquid or preferably in liquid form. Of particular interest are compositions in liquid form that are sprayable.

The Trichoderma atroviride SC1 preferably is used in the methods, or is present in the compositions, mentioned herein, in an effective amount.

The agricultural compositions for use in the invention comprise Trichoderma atroviride SC1, and optionally one or more other pesticides that are non-toxic to Trichoderma atroviride SC1, and may further comprise one or more auxiliaries customarily used in this type of compositions. Suitable auxiliaries include, for example, one or more supplements, additives, solid carriers such as minerals, solvents, thickeners, adjuvants, emulsifiers, dispersants, plant nutrients and micro-nutrients, wetting agents such as polyoxyethylene sorbitan monooleate (Tween 80™), or similar, emulsifiers, lecithin, saponins, UV protectors, antioxidants, diluents, wetting agents, spray adjuvants, solvents (in particular water), plant hormones, amenders for plant growth, waxes for protecting pruning wounds, and the like.

The agricultural compositions may also take the form of agricultural substrata that comprise Trichoderma atroviride SC1, wherein said substrata may be selected from nutrient culture media, cereals or derivatives thereof, amendments, plants or parts thereof, peat, wood or pieces thereof, clays or bark. Of interest are solid substrata. A preferred substratum is bark or boiled rice.

These agricultural substrates may also be mixed in the agricultural compositions mentioned herein above. In this type of embodiments, the agricultural composition or the substratum, or both may contain Trichoderma atroviride SC1, the combined amount of which is effective for the envisaged use.

The Trichoderma atroviride SC1 may be present in the compositions in an amount in the range from 1x10³ CFU to 1x10¹³ CFU per mL or per g of the composition, or in particular in an amount in the range of from 1x10³ CFU to 1x10¹³ CFU, or of from 1x10⁸ CFU to 1x10¹² CFU, per mL or per g.

The concentration of Trichoderma atroviride SC1 in the sprayable liquid may be in the range from 1×10⁶/L to 1×10¹³ CFU/L, or from 1×10⁶/L to 1×10¹¹CFU/L, or from 1×10⁸/L to 1×10¹³ CFU/L, or from 1×10⁸/L to 1×10¹¹CFU/L.

The CFU of Trichoderma atroviride SC1 applied per hectare may be in the range from 1×10⁹/ha to 1×10¹⁴/ha, from 1×10¹¹/ha to 1×10¹⁴/ha, from 1×10⁹/ha to 2×10¹²/ha and from 1×10¹¹/ha to 5×10¹³/ha.

Sprayable liquids may be applied by spraying the plants with a backpack sprayer, or by applying the product by spraying from an appropriately equipped airplane.

In one embodiment, when solid compositions are used the amount of Trichoderma atroviride SC1 may be 10² - 10³ conidia per mL or per g. Similar amounts may be present in semi-solid and liquid compositions. In the latter instance an effective amount of Trichoderma atroviride SC1 may be an amount in the range of from 1x10⁴ CFU to 1x10¹⁵ CFU, or from 1x10⁷ CFU to 1x10¹² CFU, or from 1x10⁹ CFU to 1x10¹¹ CFU, or about 1x10⁴ CFU 1x10¹⁰ CFU, each CFU per mL or per g.

The agricultural compositions of Trichoderma atroviride SC1 may be prepared by inoculating Trichoderma atroviride SC1 (a few spores washed from culture plates are usually sufficient) on a common nutrient substrate in liquid suspension or on a solid substrate to obtain at least 10²-10³ conidia per mL or per g of substrate (active concentration). The most commonly used liquid or semi-solid media comprise: nutrient broth, potato dextrose agar (PDA) nutrient agar, malt extract agar, malt agar, LB broth and similar known in the art. Fungi are grown under continuous shaking, for at least 48, preferably 72 hours or until conidia are produced, at an optimal growing temperature comprised from 20 to 30°C or preferably from 22 to 26°C, or at about 25°C ± 1°C, for at least 48 h. In these conditions the first conidia are produced after at least 48 hrs. In one embodiment, the solid substrate comprises sterilized cereal (such as boiled rice or wheat), flour or ground cereals, or a similar carbohydrate-rich substrate, where Trichoderma atroviride SC1 is inoculated and incubated for at least one week from 20 to 30°C or preferably from 22 to 26°C or about 25°C ± 1°C. Further ingredients, such as those mentioned herein, may be added.

Plant treatment and /or prevention may be carried out by using Trichoderma atroviride SC1 cultures grown in liquid or semi-solid media or on a solid substrate as such or as a suspension. These liquid or semi-solid media, or solid substrates, as such or as a suspension, may be applied to a plant in need of such a treatment, including to or onto parts of a plant; or a solid substrate, which may optionally be enriched in Trichoderma atroviride SC1, may be applied on or into the soil in close proximity of the plant (or on or into its locus) in need of such a treatment.

Treatments can be carried out by applying agricultural compositions to plants, on the leaves of plants, on wounds made during cutting or pruning, or to the soil to suppress the development of fungal disease on roots. Treatments can be applied by spray on plants as a common fungicide, with a timing that should be adapted to the specific situation (e.g. before infection, at a specific phenological stage of plants such as transplanting, bloom, post-harvest). Treatments can be also involve spraying or injection in the soil, mixing with the soil, by applying various substrates or by using various compositions (e.g. granules, mixed with clay or similar products, barks, vegetable or other organic matter or similar or derivatives thereof). Treatments can be applied during plant vegetative period or during dormancy. Treatment can involve application directly to the canopy or the soil to prevent infections.

Treatments can be single or frequent applications, at the same or varying time intervals, such as e.g. once in a year, every three months, every month, every two weeks, every week. The frequency of application may be adapted in case the infection persists or increases, or is expected to persist or increase.

Trichoderma atroviride SC1 has been found to be particularly effective in preventing or combating Mycosphaerella fijiensis fungal infections thereby allowing less frequent treatments as compared to the state of art.

Trichoderma atroviride SC1 has a high persistence in soil and can be easily dispersed on solid supports such as barks. It therefore is suitable for treating plants and/or areas comprising plants with culture substrata. By culture substratum is meant an organic culture support which can be either liquid, solid, semisolid (gel or gel-like) and which can be organic such as rice, bark or wood pieces or vegetable amendments, such as peat, or inorganic (e.g. mineral) such as clay. Substrata may have either a nutrient or a matrix function, or both. Wood pieces, barks or inorganic substrata are preferably pretreated with a nutrient before SC1 inoculation.

Trichoderma atroviride SC1 conidia can also be collected (e.g. by an air flux or by washing a culture substrate) and dispersed into a liquid or a liquid nutrient. Such a suspension, which in itself may be an agricultural composition, or to which may be added further ingredients, is applied directly to the plant or to the soil in close proximity (locus) to the plant. It is preferably applied in combination with nutrients such as a carbon source (e.g. a sugar) and a nitrogen source, such as amino acids, peptides, nutrient factors or plant micronutrients, for a better maintenance of the microorganism in situ.

In one embodiment, the agricultural compositions are suspensions. The suspensions may comprise Trichoderma atroviride SC1 conidia in the amounts mentioned herein, and may in particular comprise at least 1×10⁶ conidia/L.

Said suspensions may be applied directly on the plant or plant parts, or to the soil. The suspensions may be present in or on the above solid substrata mentioned herein, for example by spraying the suspension on the substratum. In one embodiment, the method for treating soil with Trichoderma atroviride SC1 comprises allowing this strain to grow on a solid substrate such as a cereal, (e.g. boiled rice), bark or wood pieces, or vegetable amenders such as peat, and distributing said supports on or into the soil in close vicinity to the plant/plants to be treated. Growth of a Trichoderma atroviride SC1 culture on such solid substrate (e.g. bark pieces) is preferably carried out by pretreatment with a microbiological medium (such as potato dextrose broth, malt extract, nutrient broth or similar) or any nutrient substance containing a carbon and a nitrogen source (such as beef extract, peptone, grinded cereals, yeast extract, sucrose or similar), inoculating such substratum with Trichoderma atroviride SC1 and incubating it in the condition described above for at least one week or until colonization is obtained. Compositions may be also prepared by washing conidia out of the infected plates or culture substrates and spraying such suspensions on the aerial parts of the plant before pathogen infection, once or frequently, or at some specific plant phenological stage, or after some agricultural operations such as pruning, cutting, planting. Treatment, either by an inoculated solid substratum or by other means such as spraying, is carried out at any time of plant cultivation to provide control of existing pathogens or to prevent new infections.

One method for rhyzosphere treatment comprises growing Trichoderma atroviride SC1 in sterilized boiled rice (or another cereal) for a few days (such as for one week, preferably for 15 days) at a temperature comprised within the optimal range, preferably at about 25°C ± 1°C, until an optimal inoculum dose in the range of 10⁷-10⁸ conidia/100g boiled rice or 1 x 10⁶ CFU g⁻¹ soil is obtained. According to this embodiment the biocontrol agent is applied directly as a fungicide-enriched rice matrix. The present invention is illustrated by the following non-limiting embodiments.

### EXAMPLES

### Example 1: Colonization of dead tissue of banana leaves by Trichoderma.

### Methodology

Healthy banana leaves were cut in regular strips of 3.5 x 1 cm and dried out overnight on absorbent filter paper. The day after, one extremity of the leaf strips was dipped for 5 minutes in a solution 2 g/L of Trichoderma spp. strains. Exactly 5 mm of one tip of the leaf strips were soaked. Each leaf strip was dried and then placed in a Petri dish on water agar (Agar 0.8%). Four replicates were prepared for each Trichoderma spp. strain tested as shown in table 1.

**Table 1**

| # | *Trichoderma species* | *Strain* | *Commercial name (if available)* |
|---|---|---|---|
| 1 | Trichoderma atroviride | SC1 | Vintec |
| 2 | Trichoderma harzianum | 127 | |
| 3 | Trichoderma viride | 101928 | |
| 4 | Trichoderma asperellum | T34 | Asperello T34 biocontrol |
| 5 | Trichoderma atroviride formulated WG | SC1 | Vintec |
| 6 | Trichoderma asperellum | ICC012 | Bioten |
| | Trichoderma gamsii formulated WP | ICC080 | |

Petri plates were incubated at 25°C and 90% relative humidity for two consecutive days. After incubation the presence of Trichoderma spp. strains was assessed at different distances from the point of inoculation (see Figure 8, soaked extremity of the strip). Small samples of leaf were taken at 10, 15, 20, 25, 30 and 35 mm of distance from the treated tip and placed in Petri plates on semi-selective medium (composition is as described above). The presence of Trichoderma spp. strains was assessed on semi selective medium and the distance reached by the fungus on the banana leaf strips was assessed (growth rate).

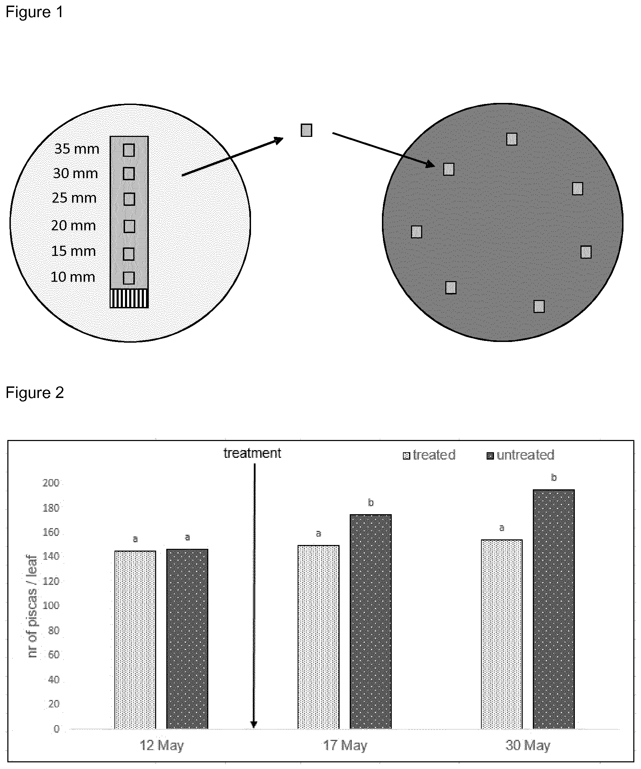

The experimental set up is illustrated in Fig. 1 which shows leaf stripes inoculated at one side (striped area) and sampling point to assess the growth rate.

### Results

Trichoderma atroviride SC1 was faster colonizing the leaf of banana, in fact the growth rate was higher than the representative sample of existing Trichoderma spp. strains known or available on the market. The colonization of the leaf tissue blocks the pathogen.

**Table 2 - Growth rate (mm/day) of Trichoderma atroviride SC1 and an example of other known Trichoderma spp.**

| *Trichoderma spp. strains* | *Growth rate (mm*/*day)* |
|---|---|
| Trichoderma atroviride SC1, formulated WG | 10.00 |
| Trichoderma atroviride SC1 | 7.50 |
| Trichoderma harzianum 127 | 6.66 |
| Trichoderma viride 101928 | 5.83 |
| Trichoderma asperellum T34 | 4.16 |
| Trichoderma asperellum ICC012 | 1.66 |
| Trichoderma gamsii ICC080, formulated WP | |

### Conclusion

It can be concluded that, thanks to the superior mechanism of action of Trichoderma atroviride SC1 (faster growth on/in banana leaf), black sigatoka can be more efficiently controlled by this strain than by known microorganisms belonging to the genus Trichoderma.

### Example 2: Field trials - mature banana plants

Field trials were carried out to assess the efficacy of Trichoderma atroviride SC1 in the control of black sigatoka (Mycosphaerella fijiensis) in banana plantations. One trial (Trial 1) was performed by spraying the plants with a backpack sprayer, while the other two (Trials 2 and 3) were carried out by applying the product by airplane.

### Spray solution

Typically, application on banana plantation was made by airplane, using a spray solution of 22 L/ha, consisting of a mixture of water, adjuvants and pesticide product. For the test item solution, the following application rate was used in trial 1: *Trichoderma atroviride* SC1: 9.2 x 10¹⁰ CFU/L corresponding to 2 x 10¹² CFU/ha The application rate in the trials 2 and 3 was:
*Trichoderma atroviride* SC1: 2 x 10¹⁰ CFU/L corresponding to 5 x 10¹¹ CFU/ha

### Spraying equipment

**Trial 1** - The treatments were done with a Maruyama electric battery sprayer Model MSB151 with the standard single head nozzle, application was done at the maximum pressure. Application was done for 2 seconds per plant, which corresponds with 13 mL/plant.

**Trial 2 and 3** - The treatments were carried out by airplane. The tank of the airplane could contain 770 I of spraying solution, necessary to spray 35 ha. The spraying apparatus of the airplane was equipped with 62 µm nozzles. The application was made by flying about 5-7 m above the plants with a wavy flight trajectory in order to cover the whole surface. The wind generated by the airplane allowed to spray uniformly the solution covering also the lower side of the leaves.

### Trial setup

### Trial 1

The applications were done with a 10 day interval on February 15, February 25, March 6, March 16 and March 26, 2016.

The trial was performed on 4 banana plants. On each plant, one leaf was left untreated and one leaf was treated with the spray solution.

On February, 15, circles were drawn around the sigatoka infection on the leaves (the so-called 'Pisca') (NT = Non treated, T = Treated).

On the assessment dates (February 22, February 29, March 6, April 8) observations were made of the expansion of the sigatoka infection spots, compared to the circles. The assessment was made visually, by comparison of treated and untreated leaves of the same age.

### Trial 2

The trial was carried out on a surface of 20 ha on adult plants of Musa acuminata (variety Giant Cavendish). Plants of the same age and variety cultivated 200 m away from the sprayed surface were used as control. This distance was chosen in order to use plants not touched by the test product by drift but with the same disease pressure. The product application took place on May 13, 2016. The assessments were made on May 17 and 30, 2016.

Two assessments were carried out:
1. Count of new spots ("piscas") on three repetitions (three plants each) per object on one whole leaf. An assessment was carried out before the treatment as well (May 12, 2016). A single factor Anova was performed to statistically analyze the data.
2. Visual assessment of the enlargement of existing piscas on selected leaves (May, 17 and 30, 2016). The assessment was carried out on five representative leaves selected randomly in the object. The same area of the leaf was observed during the different assessments.

### Trial 3

The trial was performed on a surface of 50 ha on young plants of Musa acuminata (variety Grand Nain). The product was applied on May 13, 2016 while the assessment was carried out on May 28. The piscas on one leaf per plant on a total of 10 plants per replicate were counted. Four replicates per object were used. The average of piscas per leaf was calculated. In addition the stage of the evolution of the disease was assessed according to the following definition:
- Stage 1 - small whitish spots are only visible on the lower surface of the leaf
- Stage 2 - brown rusty streaks are visible especially on the lower surface
- Stage 3 - brown streaks lengthen and widen
- Stage 4 - brown to black, round of elliptical broad stripes
- Stage 5 - the lesions become black, usually surrounded by a yellow halo
- Stage 6 - the center of the stain dies up with a black halo, itself surrounded by a yellow halo.

### Results

### Trial 1

By visual assessment on February 22 (7 days after treatment), it was determined that there was control of the black sigatoka and that the infections had not expanded. On the untreated leaves, the expansion of infection was higher (expansion = 5% of leaf) than treated (expansion = 1% of leaf) and some infections were exceeding the circles.

On February 29, 2016 (14 days after first treatment), there was still a good control on the treated leaves (expansion = 2% of leaf) on the untreated leaves the infection of black sigatoka was expanding (expansion = 15% of leaf).

On March 6 (20 days after first treatment), on the treated leaves there still was a good control of the infection on the treated leaves (expansion = 3% of leaf), whereas on the untreated leaves the degree of infection was increasing (expansion = 20% of leaf).

On April 8 the treated leaves showed and expansion of 20%, while in the untreated the expansion was 50%.

### Trial 2

The data are shown in Figure 2. The assessment carried out on May 12, 2016 prior to the treatment showed that the disease pressure was comparable in the area subject of the test and in the area selected as untreated control.

The environmental conditions in the days following the treatment were favorable for the development of the disease. The assessment performed on May 17, 4 days after the treatment, already showed a higher disease incidence in the untreated control. The average numbers of piscas counted on a leaf were 149 and 174 for the treated and untreated, respectively.

The assessment performed on May 30, 17 days after the treatment, showed a higher difference between the two objects, with a number of piscas of 154 on the treated plants and 195 in the untreated.

The visual observation of the same area of the leaf showed that the disease completely stopped in the treated plants, while the number and the dimensions of the piscas in the untreated increased noticeably (see Figure 2, which for Trial 2 shows the average of piscas in the treated and untreated plants before and after the treatment. Different letters in this figure mean different significance (P < 0.05).

### Trial 3

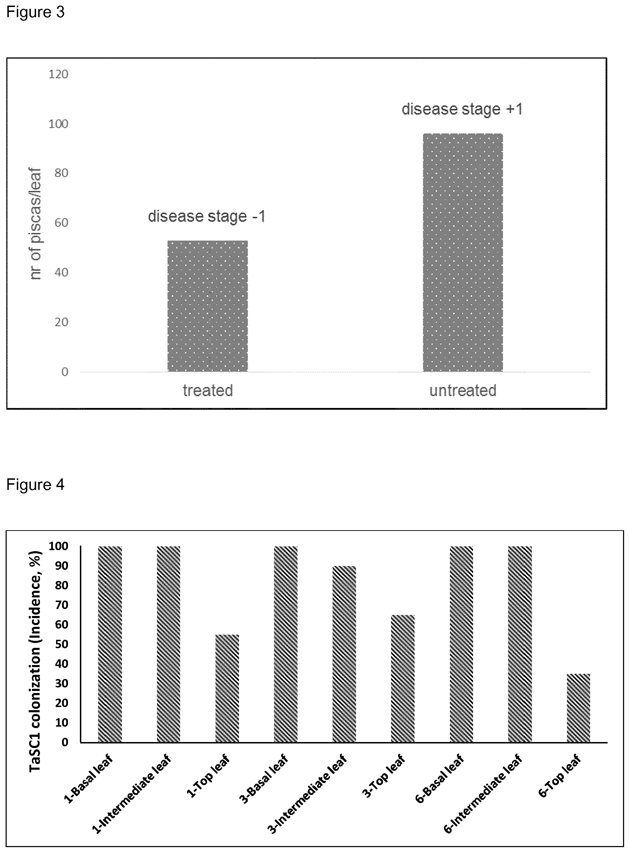

The data can be found in Figure 3, which shows the average number of piscas and disease stage in Trial 3. The assessment carried out 15 days after the treatment showed a highly different level of infection, with average numbers of piscas per leaf of 52 and 96 in the treated and untreated objects, respectively. Such difference of incidence was also reflected on the stage of the disease. The calculated stages were indeed different: -1 in the treated plants (= no disease) and +1 in the control (start of the disease).

### Conclusion

From these results it can be concluded that Trichoderma atroviride SC1 provides good control of black sigatoka in banana plants.

### Example 3: Colonization of banana leaves by Trichoderma atroviride under field conditions.

### Methodology

This experiment was carried out in a banana plantation (variety Giant Nain).

The following treatment was applied on the banana plantation (doses/hectare): Formulated Trichoderma atroviride SC1 50 g/ha in 22 L of water.

The treatment was applied by airplane on May 13, 2016. Banana leaf samples were collected on May 18 from three plants located in three different locations in the banana plantation. From each plant, leaves were sampled from different positions in the plant: basal, intermediate and top leaf.

Under aseptic conditions, each leaf was cut in small regular pieces (5x10 mm). Twenty leaf pieces from each location and position of the plant were placed on Petri plates containing a semi selective medium for the growth of Trichoderma atroviride SC1. The semi selective medium was composed of Potato Dextrose Agar amended with 0.1 g/L Rose Bengal, 0.05 g/L Streptomycin sulfate and 0.1 g/L Chloramphenicol. Petri plates were incubated at 25°C and 90% RH for three days. After incubation, the presence of Trichoderma atroviride SC1 was assessed and the incidence of colonization was calculated. The radial growth of Trichoderma atroviride SC1, as index of the concentration, was also assessed visually (mm) on each of the 20 leaf pieces incubated, average and standard deviation of the growth were calculated.

### Results

The lab assessment revealed that the leaves of bananas were quite well colonized by Trichoderma atroviride SC1 following treatment.

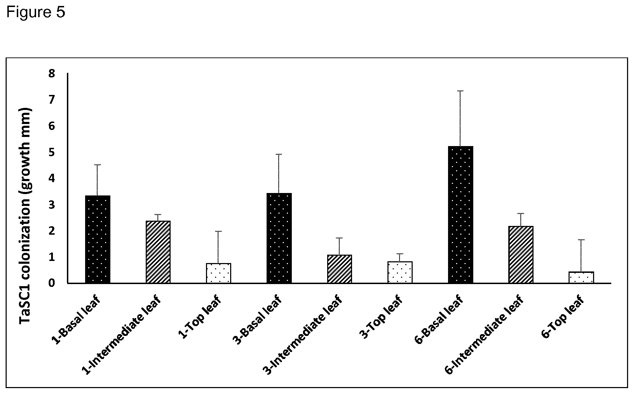

As expected the older leaves were better colonized than the younger ones, showing that the Trichoderma atroviride SC1 colonized efficiently those leaves where commonly the symptoms of the Mycosphaerella fijiensis are mostly present. Figure 4 shows T. atroviride SC1 incidence of colonization expressed as percentage while Figure 5 shows T. atroviride SC1 radial growth on semi selective medium.

### Example 4: Speed colonization on banana leaf discs of different Trichoderma species.

### MethodologyA

Banana plants were grown in pots under protected conditions (25°C-70% RH). Healthy leaves were used for leaf discs creation. Banana leaves were superficially sterilized by dipping in sodium hypochlorite 1% for 2-3 minutes and rinsed twice in sterile water (washing of 5 min each time). Leaf discs with 28 mm radius were cut off using a sterile scalpel and each one was placed with abaxial surface down in Petri dishes on PDA medium.

Trichoderma species were grown on PDA medium; from 3 days old plates plugs were cut off and used as source of inoculum. Trichoderma plugs were placed in the center of banana leaf discs. The development of Trichoderma mycelium was monitored, in particular the time (in hours) necessary to colonize the leaf disc and reach the PDA surface was assessed.

### Results A

The results of the experiments are provided in Table 3.

**Table 3 - Colonization timings of different Trichoderma species incubated at 25°C**

| **Species tested** | **Time (hours) to colonize 28 mm of banana leaf disc** | **Trichoderma growth in mm/hour on banana leaf** |
|---|---|---|
| *T. atroviride* SC1 | 68 | 0.411 |
| *T. viride* 101928 | 100 | 0.280 |
| *T. harzianum* T39 | 116 | 0.241 |
| *T. asperellum* T34 | 96 | 0.291 |
| *T. harzianum* 127 | 92 | 0.304 |
| Negative control | 0 | 0 |

As reported in Table 3 the tested Trichoderma species and strains showed different speeds of banana leaf colonization. In optimal conditions of temperature the fastest colonizer was *Trichoderma atroviride* SC1 with a growth rate of 0.411 mm/h followed by *T. harzianum* 127, *T. asperellum* T34 and *T. viride* 101928 which showed rates of 0.304, 0.291 and 0.280 mm/h respectively. The negative control was not inoculated and it did not show presence of Trichoderma. *T. harzianum* T39 showed the slowest growth rate (0.24 mm/h) even if this rate is not so distant from the performance of *T*. *viride* 101928 and *T. asperellum* T34.

### Methodology B

Banana plants were grown in pots under protected conditions (25°C-70% RH). Healthy leaves were used for leaf discs creation. Banana leaves were superficially sterilized by dipping in sodium hypochlorite 1% for 2-3 minutes and rinsed twice in sterile water (washing of 5 min each time). Leaf discs with 28 mm radius were cut off using a sterile scalpel and each one was placed with abaxial surface down in Petri dishes on PDA medium.

Trichoderma species were grown on PDA medium; from 7-10 days old plates spores were collected (using sterile water) and used as source of inoculum. Each Trichoderma spore suspension was quantified by hemocytometer and diluted to 5X10⁴ spores/mL. A drop of 10 µL of the diluted spore suspension was placed in the center of banana leaf discs using a micropipette. The development of Trichoderma mycelium was monitored, in particular the time (in hours) necessary to colonize the leaf disc and reach the PDA surface was assessed.

### Results B

The results of the experiments are provided in Table 4.

**Table 4 - Colonization timings of different Trichoderma species incubated at 25°C**

| **Species tested** | **Time (hours) to colonize 28 mm of banana leaf disc** | **Trichoderma growth in mm/hour on banana leaf** |
|---|---|---|
| *T. atroviride* SC1 | 51 | 0,549 |
| *T. viride* 101928 | 74 | 0,378 |
| *T. harzianum* T39 | 77 | 0,364 |
| *T. asperellum* T34 | 96 | 0,292 |
| *T. harzianum* 127 | 146 | 0,192 |
| Vintec | 57 | 0,491 |
| Negative Control | 0 | 0 |

As reported in Table 4 the tested Trichoderma species and strains showed speeds of banana leaf colonization comparable with the first experiment. The second experiment confirmed that in optimal conditions of temperature the faster colonizer was *Trichoderma atroviride* SC1 with a growth rate of 0.549 mm/h. The formulated product Vintec, also containing Trichoderma atroviride SC1, showed a growth rate equal to 0.491 mm/h similar to the active ingredient alone. Similarly to the first experiment (A) *T*. *viride* 101928, *T. harzianum* T39 and *T. asperellum* T34 showed similar growth rates: 0.378, 0.364 and 0.292 mm/h respectively. The slower colonizer of banana leaf disc was *T. harzianum* 127 with a growth rate of 0.192 mm/h differently from what observed in experiment A. The negative control not inoculated did not show presence of Trichoderma.

### Conclusion

From these results it can be concluded that *Trichoderma atroviride* SC1 provides improved growth rates as compared to other strains of *Trichoderma.*

## Claims

1. A method of preventing or combating Mycosphaerella fijiensis fungal infection in a plant or plant material, which method comprises applying Trichoderma atroviride SC 1 to the plant, plant material, or the locus of the plant.

2. The method of claim 1 which comprises colonizing banana leaves with Trichoderma atroviride SC1 to prevent and combat Mycosphaerella fijiensis.

3. The method according to claim 1 or claim 2, wherein the Mycosphaerella fijiensis fungal infection is in a plant.

4. The method according to claim 3, wherein the Trichoderma atroviride SC 1 is applied to the leaves of the plant.

5. The method according to any of claims 1 to 4, wherein the plant belongs to the genus Musa or the plant material is derived from a plant that belongs to the genus Musa.

6. The method according to claim 5, wherein the plant that belongs to the genus Musa is Musa acuminata, Musa balbisiana or Musa × paradisiaca.

7. The method of any of claims 1 to 6, wherein Trichoderma atroviride SC1 is applied in combination with one or more other pesticides that are non-toxic to Trichoderma atroviride SC1.

8. The method according to any of claims 1 to 7, wherein the Trichoderma atroviride SC 1, optionally in combination one or more other pesticides that are non-toxic to Trichoderma atroviride SC1, is applied in a composition comprising one or more further auxiliaries.

9. The method according to claims 8, wherein the composition is a sprayable liquid.

10. The method according to claim 9, wherein the composition is sprayed on the whole of the above-ground part of the plant.

11. The method according to any of claims 8 to 10, wherein the Trichoderma atroviride SC1 is present in the composition in an amount in the range 1×10⁶/L to 1×10¹³ CFU/L, or from 1×10⁶/L to 1×10¹¹ CFU/L, or from 1×10⁸/L to 1×10¹³CFU/L, or from 1×10⁸/L to 1×10¹¹ CFU/L.

12. The method according to any of claims 1 to 11, wherein the Trichoderma atroviride SC 1 is applied in an amount of that is in the range of from 1×10⁹ CFU/ha to 1×10¹⁴ CFU/ha.

13. The method according to claim 12, wherein the Trichoderma atroviride SC 1 is applied in an amount in the range of from 1×10¹¹ CFU/ha to 5×10¹³ CFU/ha.

14. Use of Trichoderma atroviride SC1 in the prevention or combat of Mycosphaerella fijiensis fungal infection in a plant or plant material.

## Patentansprüche

1. Verfahren zur Vorbeugung oder Bekämpfung einer Infektion mit dem Pilz Mycosphaerella fijiensis bei einer Pflanze oder bei Pflanzenmaterial, wobei das Verfahren das Aufbringen von Trichoderma atroviride SC1 auf die Pflanze, das Pflanzenmaterial oder den Standort der Pflanze umfasst.

2. Verfahren nach Anspruch 1, das das Besiedeln von Bananenblättern mit Trichoderma atroviride SC1 umfasst, um Mycosphaerella fijiensis vorzubeugen und zu bekämpfen.

3. Verfahren nach Anspruch 1 oder Anspruch 2, wobei die Infektion mit dem Pilz Mycosphaerella fijiensis in einer Pflanze ist.

4. Verfahren nach Anspruch 3, wobei Trichoderma atroviride SC1 auf die Blätter der Pflanze aufgebracht wird.

5. Verfahren nach einem der Ansprüche 1 bis 4, wobei die Pflanze zur Gattung Musa gehört oder das Pflanzenmaterial von einer Pflanze abgeleitet ist, die zur Gattung Musa gehört.

6. Verfahren nach Anspruch 5, wobei die Pflanze, die zu der Gattung Musa gehört, Musa acuminata, Musa balbisiana oder Musa x paradisiaca gehört.

7. Verfahren nach einem der Ansprüche 1 bis 6, wobei Trichoderma atroviride SC1 in Kombination mit einem oder mehreren anderen Pestiziden aufgetragen wird, die gegenüber Trichoderma atroviride SC1 nicht toxisch sind.

8. Verfahren nach einem der Ansprüche 1 bis 7, wobei Trichoderma atroviride SC1, optional in Kombination mit einem oder mehreren anderen Pestiziden, die gegenüber Trichoderma atroviride SC1 nicht toxisch sind, in einer Zusammensetzung aufgetragen wird, die einen oder mehrere weitere Hilfsstoffe umfasst.

9. Verfahren nach Anspruch 8, wobei die Zusammensetzung eine sprühbare Flüssigkeit ist.

10. Verfahren nach Anspruch 9, wobei die Zusammensetzung auf den gesamten überirdischen Teil der Pflanze gesprüht wird.

11. Verfahren nach einem der Ansprüche 8 bis 10, wobei Trichoderma atroviride SC1 in der Zusammensetzung in einer Menge im Bereich von 1x10⁶/L bis 1x10¹³ CFU/L, von 1x10⁶/L bis 1x10¹¹ CFU/L, von 1x10⁸/L bis 1x10¹³CFU/L oder von 1x10⁸/L bis 1x10¹¹ CFU/L vorhanden ist.

12. Verfahren nach einem der Ansprüche 1 bis 11, wobei der Trichoderma atroviride SC1 in einer Menge aufgebracht wird, die im Bereich von 1x10⁹ CFU/ha bis 1x10¹⁴ CFU/ha liegt.

13. Verfahren nach Anspruch 12, wobei der Trichoderma atroviride SC1 in einer Menge aufgebracht wird, die im Bereich von 1x10¹¹ CFU/ha bis 5x10¹³ CFU/ha liegt.

14. Verwendung von Trichoderma atroviride SC1 in der Vorbeugung oder Bekämpfung einer Infektion mit dem Pilz Mycosphaerella fijiensis bei einer Pflanze oder bei Pflanzenmaterial.

## Revendications

1. Procédé de prévention d'une infection fongique par Mycosphaerella fijiensis ou de lutte contre celle-ci dans une plante ou un matériel végétal, lequel procédé comprend une application de Trichoderma atroviride SC1 à la plante, au matériel végétal ou au locus de la plante.

2. Procédé de la revendication 1 qui comprend une colonisation de feuilles de bananier avec Trichoderma atroviride SC1 pour prévenir Mycosphaerella fijiensis et lutter contre celui-ci.

3. Procédé selon la revendication 1 ou la revendication 2, dans lequel l'infection fongique par Mycosphaerella fijiensis est dans une plante.

4. Procédé selon la revendication 3, dans lequel le Trichoderma atroviride SC1 est appliqué aux feuilles de la plante.

5. Procédé selon l'une quelconque des revendications 1 à 4, dans lequel la plante appartient au genre Musa ou le matériel végétal est dérivé d'une plante qui appartient au genre Musa.

6. Procédé selon la revendication 5, dans lequel la plante qui appartient au genre Musa est Musa acuminata, Musa balbisiana ou Musa x paradisiaca.

7. Procédé de l'une quelconque des revendications 1 à 6, dans lequel Trichoderma atroviride SC1 est appliqué en combinaison avec un ou plusieurs autres pesticides qui ne sont pas toxiques pour Trichoderma atroviride SC1.

8. Procédé selon l'une quelconque des revendications 1 à 7, dans lequel Trichoderma atroviride SC1, en option en combinaison avec un ou plusieurs autres pesticides qui ne sont pas toxiques pour Trichoderma atroviride SC1, est appliqué dans une composition comprenant un ou plusieurs autres auxiliaires.

9. Procédé selon la revendication 8, dans lequel la composition est un liquide pulvérisable.

10. Procédé selon la revendication 9, dans lequel la composition est pulvérisée sur la totalité de la partie aérienne de la plante.

11. Procédé selon l'une quelconque des revendications 8 à 10, dans lequel le Trichoderma atroviride SC1 est présent dans la composition en une quantité comprise dans la gamme des 1 x 10⁶/L à 1 x 10¹³ CFU/L ou des 1 x 10⁶/L à 1 x 10¹¹ CFU/L ou des 1 x 10⁸/L à 1 x 10¹³ CFU/L ou des 1 x 10⁸/L à 1 x 10¹¹ CFU/L.

12. Procédé selon l'une quelconque des revendications 1 à 11, dans lequel le Trichoderma atroviride SC1 est appliqué en une quantité qui est comprise dans la gamme des 1 x 10⁹ CFU/ha à 1 x 10¹⁴ CFU/ha.

13. Procédé selon la revendication 12, dans lequel le Trichoderma atroviride SC1 est appliqué en une quantité comprise dans la gamme des 1 x 10¹¹ CFU/ha à 5 x 10¹³ CFU/ha.

14. Utilisation de Trichoderma atroviride SC1 dans la prévention d'une infection fongique par Mycosphaerella fijiensis ou de lutte contre celle-ci dans une plante ou un matériel végétal.
